# EUROPEAN PATENT SPECIFICATION

(11) **EP 4 366 362 B1**
(45) Date of publication and mention of the grant of the patent: **02.12.2026**
(21) Application number: 22836894.0
(22) Date of filing: 05.07.2022
(51) Int. Cl.: G06N 20/00, H04W 24/02, H04L 41/16, H04W 40/00, H04W 88/08

(54) **AI TASK CONTROL METHOD, TERMINAL, BASE STATION, AND STORAGE MEDIUM**
KI-AUFGABENSTEUERUNGSVERFAHREN, ENDGERÄT, BASISSTATION UND SPEICHERMEDIUM
PROCÉDÉ DE COMMANDE DE TÂCHE D'INTELLIGENCE ARTIFICIELLE (IA), TERMINAL, STATION DE BASE ET SUPPORT DE STOCKAGE

(30) Priority: 05.07.2021 CN 202110756873
(43) Date of publication of application: 08.05.2024
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: WANG, Yingying, Beijing 100053 (CN); SUN, Junshuai, Beijing 100053 (CN); SUN, Xin, Beijing 100053 (CN); LI, Na, Beijing 100053 (CN); ZHAO, Yun, Beijing 100053 (CN); LIU, Guangyi, Beijing 100053 (CN)
(74) Representative: J A Kemp LLP
(86) International application number: PCT/CN2022/103824
(87) International publication number: WO 2023/280143

(56) References cited:
- WO-A1-2021/142637
- CN-A- 112 383 927
- CN-A- 112 714 486
- CN-A- 114 697 984
- US-B2- 10 992 331
- OPPO, CMCC, CHINA TELECOM, CHINA UNICOM, QUALCOMM: "SID Proposal: Study on AI/ML Model Transfer in 5GS", 3GPP DRAFT; S1-193479, vol. SA WG1, 25 November 2019 (2019-11-25), Reno, USA, pages 1 - 3, XP051831222

## Description

### CROSS-REFERENCE TO RELATED APPLICATIONS

This application is filed based on and claims priority to Chinese Patent application No. 202110756873.5 filed on July 5, 2021.

### TECHNICAL FIELD

The disclosure relates to the technical field of mobile communication, and in particular to an Artificial Intelligence (AI) task control method, a terminal, a base station, and a computer-readable storage medium.

### BACKGROUND

Fifth-generation mobile communication technology (5G) and AI are gradually integrating into people's lives, and bring new economic growth trends. With the rapid development of AI technologies, in a future network, the network architecture will be more and more integrated with the AI technologies. In a future sixth-generation mobile communication technology (6G) era, AI will inevitably become an essential part of the network architecture.

In the related art, combination of the network architecture and AI is still in an initial stage of research, and many application scenarios have not been considered in the network architecture. For example, AI enhancement usually uses plug-in solutions, and an intelligent endogenous network architecture has not been proposed. For another example, although a terminal has certain computing power, AI capability of the terminal side is not considered when the network is designed. Furthermore, in the related art, AI model is trained at the network side, a part of data of the network or terminal is usually acquired through the network, AI modeling is performed through the data, and the design is optimized according to goals to be achieved. However, the above solutions face some challenges: 1) More and more volumes of data need to be reported, which furthermore occupies more network bandwidth. 2) The terminal also becomes more and more intelligent, however, this architecture may only perform AI calculation at the network side, and does not fully utilize computing power of the terminal. 3) In a communication network, the terminal usually obtains data with more dimensions than the network side, however, security of data of the terminal is a sensitive factor.

Related art may be found in US 10 992 331 B2 (JASSAL AMAN [CA]; BALIGH MOHAMMADHADI [CA] ET AL.) 27 April 2021, and CN 114 697 984 A (RESEARCH INSTITUTE OF CHINA MOBILE COMMUNICATIONS CORPORATION et al.) 1 July 2022. The document discloses a wireless-network signalling mechanism for configuring UE-side AI modules to perform communication tasks (channel estimation, CSI compression, interference cancellation, beam-failure detection, etc.) and network-side loss functions for offline training

### SUMMARY

In order to solve problems of the related art, at least one embodiment of the disclosure provides an AI task control method, a terminal, a base station, and a computer-readable storage medium.

The present invention is defined in the appended independent claims. Advantageous features are set out in the appended dependent claims.

Compared to the related art, according to the AI task control method, the terminal, the base station and the storage medium provided in embodiments of the disclosure, an intelligent endogenous network architecture and corresponding AI interaction processes are provided. Here, based on fully mining computing power of the terminal, that is, based on utilizing the computing power of the terminal, intelligence is used as a part of air interface transmission, to implement an intelligent endogenous network and improve intelligence of the network. In the embodiments of the disclosure, the terminal acquires data, preprocesses the data and then reports to the base station, which may reduce volumes of data required to be uploaded. Furthermore, since the uploaded data is not original user data, security of data of the terminal may be improved.

### BRIEF DESCRIPTION OF THE DRAWINGS

Various other advantages and benefits will become apparent to those of ordinary skill in the art upon reading following detailed descriptions of some embodiments. The drawings are only for the purpose of illustrating some embodiments, and are not considered as limitation to the disclosure. Furthermore, the same reference numeral is used to denote the same component throughout the drawings. In the drawings:
FIG. 1 is a schematic diagram of an application scenario according to an embodiment of the disclosure.
FIG. 2 is an exemplary diagram of an AI endogenous module in a user plane protocol stack according to an embodiment of the disclosure.
FIG. 3 is an exemplary diagram of an AI endogenous module in a signaling plane protocol stack according to an embodiment of the disclosure.
FIG. 4 is a schematic structural diagram of a first function module according to an embodiment of the disclosure.
FIG. 5 is a schematic structural diagram of a second function module according to an embodiment of the disclosure.
FIG. 6 is an exemplary diagram of an AI endogenous overall architecture according to an embodiment of the disclosure.
FIG. 7 is a flowchart when an AI task control method according to an embodiment of the disclosure is applied to a base station side.
FIG. 8 is a flowchart when an AI task control method according to an embodiment of the disclosure is applied to a terminal side.
FIG. 9 is a schematic structural diagram of a base station according to an embodiment of the disclosure.
FIG. 10 is a schematic structural diagram of a terminal according to an embodiment of the disclosure.

### DETAILED DESCRIPTION

Exemplary embodiments of the disclosure will be described in more detail below with reference to the drawings. Although the exemplary embodiments of the disclosure are shown in the drawings, it should be understood that the disclosure may be implemented in various forms and should not be limited to the embodiments set forth here. Instead, these embodiments are provided so that the disclosure may be understood more thoroughly, and the scope of the disclosure may be fully conveyed to those skilled in the art.

Terms "first", "second" or the like in the description and claims of the disclosure are intended to distinguish similar objects, and are not necessarily intended to describe a specific order or sequence. It should be understood that data used as such are interchangeable in appropriate cases, such that for example, the embodiments of the disclosure described here may be implemented in sequences besides those shown or described here. Furthermore, terms "include", "have" as well as any variants thereof, are intended to cover a non-exclusive inclusion. For example, a process, method, system, product or device including a sequence of operations or units is not necessarily limited to those operations or units listed clearly, instead, may include other operations or units which not listed clearly or inherent to the process, method, product or device. In the description and claims, "and/or" indicates at least one of connected objects.

Technologies described in the disclosure are not limited to a New Radio (NR) system and a Long Time Evolution (LTE)/LTE-Advanced (LTE-A) system, and may also be used in various wireless communication systems, such as Code Division Multiple Access (CDMA), Time Division Multiple Access (TDMA), Frequency Division Multiple Access (FDMA), Orthogonal Frequency Division Multiple Access (OFDMA), Single-carrier Frequency-Division Multiple Access (SC-FDMA) and other systems. Terms "system" and "network" are often used interchangeably. The CDMA system may implement radio technologies such as CDMA2000, Universal Terrestrial Radio Access (UTRA), etc. UTRA includes Wideband Code Division Multiple Access (WCDMA) and other CDMA variants. The TDMA system may implement radio technologies such as Global System for Mobile Communication (GSM), etc. The OFDMA system may implement radio technologies such as Ultra Mobile Broadband (UMB), Evolution-UTRA (E-UTRA), IEEE 802.21 (Wi-Fi), IEEE 802.16 (WiMAX), IEEE 802.20, Flash-OFDM, etc. UTRA and E-UTRA are part of Universal Mobile Telecommunications System (UMTS). LTE and more advanced LTE (such as LTE-A) are new UMTS versions using E-UTRA. UTRA, E-UTRA, UMTS, LTE, LTE-A and GSM are described in documents from an organization named "3rd Generation Partnership Project (3GPP)". CDMA2000 and UMB are described in documents from an organization named "3rd Generation Partnership Project 2 (3GPP2)". Technologies described in the disclosure may be used in the systems and radio technologies mentioned above, and may also be used in other systems and radio technologies. However, the following descriptions describe the NR system for the purpose of examples, and NR terms are used in most of the following descriptions, although these technologies are also applicable to applications besides applications of the NR system.

The following descriptions provide examples, rather than limiting the scope, applicability or configuration set forth in the claims. Variations may be made to functions and arrangements of discussed elements, without departing from the spirit and scope of the disclosure. Various examples may omit, replace, or add various procedures or components appropriately. For example, the described methods may be performed in an order different from that described, and various operations may be added, omitted or combined. Furthermore, features described with reference to certain examples may be combined in other examples.

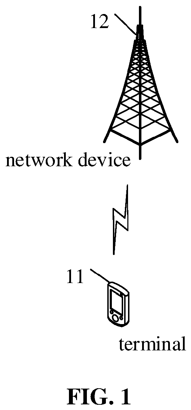

FIG. 1 shows a block diagram of a wireless communication system to which the embodiments of the disclosure are applicable. The wireless communication system includes a terminal 11 and a network device 12. The terminal 11 may also be referred to as a user terminal or User Equipment (UE), or may also be referred to as a user, and the terminal 11 may include terminal-side devices such as a mobile phone, a tablet personal computer, a laptop computer, a Personal Digital Assistant (PDA), a Mobile Internet Device (MID), a wearable device, or a vehicle-mounted device, etc. It should be noted that specific type of the terminal 11 is not limited in the embodiments of the disclosure. The network device 12 may include elements of a core network and/or a base station. The base station may include a base station of 5G and later versions (such as gNB, 5G NR NB, etc.) or a base station in other communication systems (such as eNB, WLAN access point, or other access point, etc.). The base station may be referred to as Node B (NB), evolved Node B (eNB), access point, Base Transceiver Station (BTS), radio base station, radio transceiver, Basic Service Set (BSS), Extended Service Set (ESS), B node, evolved B node, home B node, home evolved B node, WLAN access point, Wi-Fi node, or any other suitable terms in the field, as long as the same technical effect is achieved, the base station is not limited to specific technical terms. It should be noted that the base station in the NR system is taken as an example only in the embodiments of the disclosure, however, specific type of the base station is not limited.

The base station may communicate with the terminal 11. Some base stations may communicate control information or user data with the core network through backhaul. In some examples, some of these base stations may communicate with each other directly or indirectly through a backhaul link which may be a wired or wireless communication link. The wireless communication system may support operations on multiple carriers (waveform signals with different frequencies). A multi-carrier transmitter may transmit modulated signals on multiple carriers simultaneously. For example, each communication link may be a multi-carrier signal modulated according to various radio technologies. Each modulated signal may be sent on a different carrier and may carry control information (such as reference signal, control channel, etc.), overhead information, data, etc.

The base station may wirelessly communicate with the terminal 11 through one or more antennas of the access point. Each base station may provide communication coverage to a corresponding coverage area thereof. The coverage area of the access point may be divided into sectors each constituting only a part of the coverage area. The wireless communication system may include different types of base stations (such as macro base station, micro base station, or pico base station). The base station may also use different radio technologies, such as cellular or WLAN radio access technologies. The base station may be associated with the same or different access network or operator deployments. Coverage areas of different base stations (including coverage areas of the same or different types of base stations, coverage areas using the same or different radio technologies, or coverage areas belonging to the same or different access networks) may overlap.

The communication link in the wireless communication system may include an Uplink (UL) for carrying UL transmission (for example, from the terminal 11 to the network device 12) or an Downlink (DL) for carrying DL transmission (for example, from the network device 12 to the terminal 11). The UL transmission may also be referred to as reverse link transmission, and the DL transmission may also be referred to as forward link transmission. The DL transmission may be performed by using a licensed band, an unlicensed band, or both. Similarly, the UL transmission may be performed by using a licensed band, an unlicensed band, or both.

As mentioned in the background, the network architecture in the related art does not fully utilize computing power of the terminal, requires the terminal to upload a large volume of data, which occupies too much bandwidth and is not conducive to security of data of the terminal. In order to solve at least one of the above problems, an embodiment of the disclosure provides an AI task control method, which may implement an intelligent endogenous network and improve intelligence of the network, based on utilizing the computing power of the terminal.

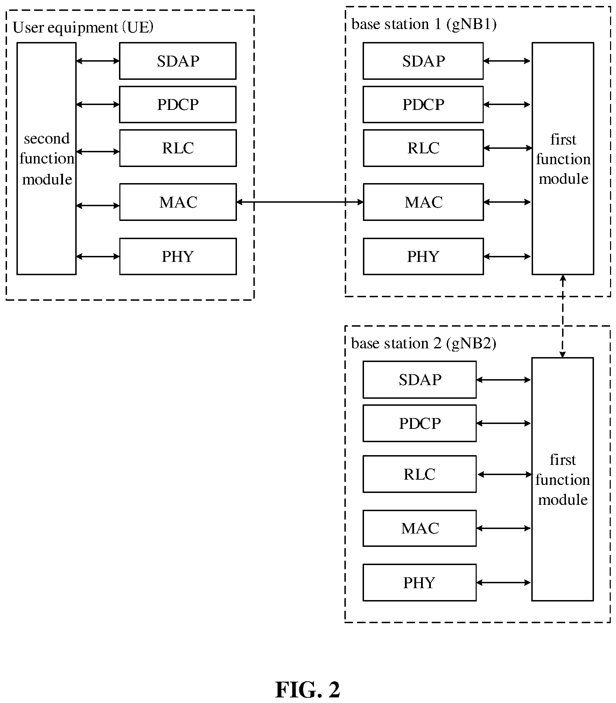

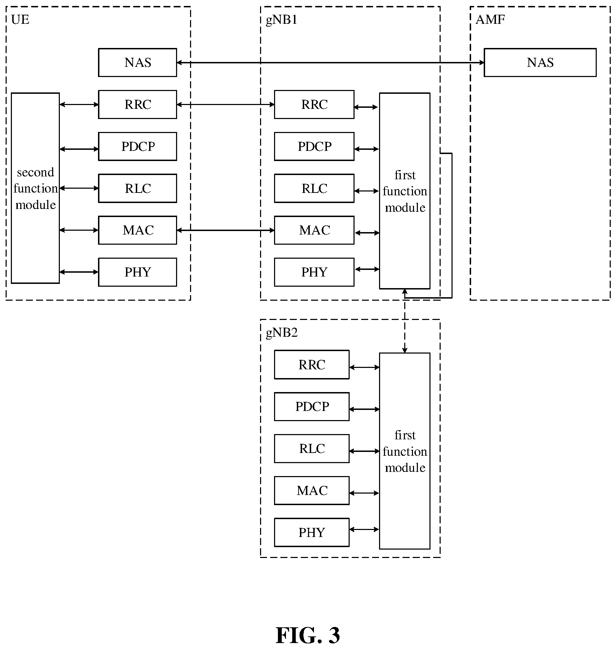

As shown in FIG. 2 and FIG. 3, in the embodiment of the disclosure, an AI endogenous module is added to the base station (including a base station 1 and a base station 2) and the terminal respectively. In order to facilitate descriptions, the AI endogenous module in the base station is referred to as a first function module, the AI endogenous module in the terminal is referred to as a second function module. Names of the first function module and the second function module are not limited in the embodiments of the disclosure, as long as functions of the first function module and the second function module are implemented. FIG. 2 gives an example of an AI endogenous module in a user plane protocol stack, and FIG. 3 gives an example of an AI endogenous module in a signaling plane protocol stack (control plane protocol stack).

The first function module in the base station is configured to perform AI task control for a terminal, AI task execution, network decision generation, and data management by interacting with the terminal.

Here, the AI task control of the base station to the terminal may be understood as end-to-end AI task control.

The second function module in the terminal is configured to perform the following functions through interacting with a base station: AI task control to the terminal, data acquisition and report, and AI task execution.

In the embodiments of the disclosure, through interaction between the base station and the AI endogenous module of the terminal, the terminal acquires data, preprocesses the data and then reports to the base station, which may reduce volumes of data required to be uploaded. Furthermore, since the uploaded data is not original user data, security of data of the terminal may be improved. The embodiments of the disclosure may also utilize the computing power of the terminal to execute AI tasks and report execution results, so that existing computing power of the terminal may be fully utilized to implement an intelligent endogenous network and improve intelligence of the network.

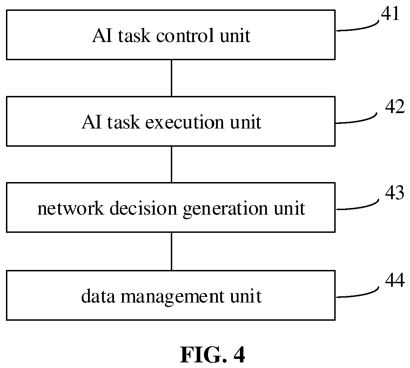

As shown in FIG. 4, the first function module at the base station side specifically includes an AI task control unit 41, an AI task execution unit 42, a decision generation unit 43 and a data management unit 44

The AI task control unit 41 is configured to determine one or more configurations of configurations including a first AI model and algorithm required to be used, data acquisition requirement, data preprocessing mode, AI task configuration, and AI model evaluation indexes according to external or internal task requirement of the base station, configure the one or more configurations to at least the terminal or a local position, and receive at least a data acquisition result or AI model evaluation result sent by the terminal.

The AI task execution unit 42 is configured to generate a corresponding execution result based on the data acquisition result (such as the data acquisition result sent by the terminal and received by the AI task control unit 41) according to the first AI model and algorithm.

The decision generation unit 43 is configured to generate network decision according to the execution result generated by the AI task execution unit 42.

The data management unit 44 is configured to maintain a task queue of AI tasks, an AI model and algorithm library, and an acquired data set. Maintenance of the data set may include managing data acquired by the terminal in a set manner.

In the embodiments of the disclosure, the AI task control unit 41 may determine the data acquisition requirement and the data preprocessing mode according to external requirement or optimization goal. For example, when resource allocation optimization configured externally is turned on, the first function module determines the data acquisition requirement, data preprocessing mode and data maintenance mode corresponding to the resource allocation optimization. At this time, the first function module may also configure a physical layer to acquire channel quality of a current user, configure a Service Data Adaptation Protocol (SDAP) and Packet Data Convergence Protocol (PDCP) layer to acquire data type of the user, configure a Media Access Control (MAC) layer to acquire throughput or other information of the user, and configure the data acquisition requirement and data preprocessing mode to the terminal.

In an embodiment, the AI task control unit 41 may be further configured to form an AI model library for executing the task requirement according to the task requirement, determine the AI model evaluation indexes including at least model convergence time or prediction accuracy to evaluate AI models in the AI model library, so as to determine the first AI model required to be used.

In an embodiment, the AI task control unit 41 may be further configured to send the data acquisition requirement to a corresponding module in the base station, and receive the data acquisition result sent by the corresponding module in the base station. The decision generation unit 43 may be further configured to send the network decision to the corresponding module in the base station.

In an embodiment, the AI task control unit 41 may be further configured to determine other network elements required to participate in calculation of the task requirement, schedule and control the other network elements to participate in a training task of the first AI model, and perform synchronization of the first AI model and transmission of model parameters between the base station and the other network elements.

In the embodiments of the disclosure, the base station may further include a Radio Resource Control (RRC) layer function module, this module is arranged in a RRC layer of the base station shown in FIG. 2 and configured to perform at least one of following operations:
sending a first task request to the terminal;
receiving a second task requirement from the terminal and sending the second task requirement to the first function module;
receiving one or more configurations, that are determined by the first function module, of configurations including the first AI model and algorithm, the data acquisition requirement, the data preprocessing mode, the AI task configuration, and the AI model evaluation indexes, and sending the one or more configurations to the terminal;
receiving at least one of data, labels, AI model evaluation results or AI model parameters sent by the terminal or other network element nodes and sending the at least one of data, labels, AI model evaluation results or AI model parameters to the first function module; or
receiving network decision for the second task requirement fed back by the first function module and sending the network decision for the second task requirement to the terminal.

In an embodiment, the base station may further include a MAC layer function module, this module is arranged in a MAC layer of the base station shown in FIG. 2 and configured to perform at least one of following operations:
sending a third task reqirement to the terminal;
receiving a fourth task requirement from the terminal and sending the fourth task requirement to the first function module;
receiving one or more configurations, that are determined by the first function module, of configurations including the first AI model and algorithm, the data acquisition requirement, the data preprocessing mode, the AI task configuration, and the AI model evaluation indexes, and sending the one or more configurations to the terminal;
receiving at least one of data, labels, AI model evaluation results or AI model parameters sent by the terminal or other network element nodes and sending the at least one of data, labels, AI model evaluation results or AI model parameters to the first function module; or
receiving network decision for the second task requirement fed back by the first function module and sending the network decision for the second task requirement to the terminal.

Furthermore, in an actual application, the base station may further include other protocol layer modules, the other protocol layer modules may specifically include a PDCP layer function module, a SDAP layer function module, or the like, and these function modules may be configured to perform at least one of following operations:
issuing a fifth task requirement to the first function module; or
receiving network decision for the fifth task requirement fed back by the first function module.

It may be seen from the above descriptions that interaction between the first function module at the base station side and other modules includes:
A) interior of a network element: according to the requirement and optimization goal, the first function module sends the network decision to the corresponding module; according to the data acquisition requirement, the first function module sends data acquisition instructions to other modules and receives corresponding data acquisition results. Here, the network element refers to the base station, and the interior of the network element refers to interior of the base station to which the first function module belongs.
b) between network elements, between network elements and terminals: in case of AI computing which requires participation of multiple network elements, the first function module is responsible for scheduling training tasks of the participants, controlling the training tasks of the participants, synchronization of the AI model, and data transmission of AI models and weights between the network elements. In case of a data acquisition requirement which requires cooperation of the terminal, the first function module further performs data acquisition configuration on the terminal, including data acquisition messages of raw data or preprocessed data. Here, 'between network elements' refers to 'between various base stations'.

At the network side, protocol layers interacting with the first function module includes one or more of RRC, MAC or other protocol layers of the base station.
1) RRC: RRC issues a corresponding task requirement (such as optimization goal or requirement) to the first function module, such as optimization of switching parameters, the first function module generates a corresponding data acquisition requirement and AI model parameters, and task configuration is sent to the terminal through RRC signaling. The first function module feeds back the decision to RRC.
2) MAC: MAC issues a task requirement (such as optimization goal or requirement) to the first function module, the first function module notifies a corresponding data acquisition requirement and/or AI model parameters to MAC, and MAC receives data and/or AI model parameters from other network element nodes or terminals and notifies the first function module; the MAC layer is responsible for interaction between the AI model and/or data acquisition and the terminal.
3) Other protocol layers of the base station: other protocol layers of the base station issue corresponding task requirements (such as optimization goal or requirement) to the first function module, the first function module generates corresponding data acquisition requirements, obtains an optimization result in combination with the data acquisition result, and feeds back the optimization result to a corresponding protocol layer.

The embodiments of the disclosure use intelligence as a part of the base station by introducing the intelligent endogenous architecture. Organic integration of AI model algorithm, interaction process and wireless communication is implemented through integration with the wireless architecture, and the purpose of self-optimization, self-evolution and self-generation of the base station is achieved.

In an actual application, the first function module, the RRC layer function module, the MAC layer function module and other protocol layer modules may be implemented by a processor in the base station in combination with a transceiver.

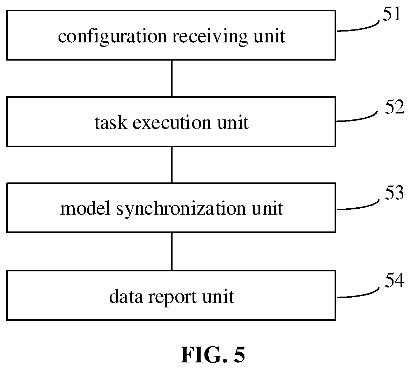

As shown in FIG. 5, the second function module at the terminal side includes a configuration receiving unit 51, a task execution unit 52, a model synchronization unit 53 and a data report unit 54.

The configuration receiving unit 51 is configured to receive one or more configurations, that are sent by the base station, of configurations including a first AI model and algorithm, data acquisition requirement, data preprocessing mode, AI task configuration, and AI model evaluation indexes.

The task execution unit 52 is configured to execute an AI task according to the first AI model and algorithm configured by the base station, and generate an inference result; perform evaluation according to the AI model evaluation indexes configured by the base station, obtain at least AI model evaluation results or AI model parameters and send at least the AI model evaluation results or AI model parameters to the base station.

The model synchronization unit 53 is configured to perform AI model synchronization between the terminal and the base station.

The data report unit 54 is configured to acquire data according to the data acquisition requirement and the data preprocessing mode, generate at least acquired data or labels, and report at least the acquired data or labels to the base station.

In the embodiments of the disclosure, the terminal may further include a RRC layer function module, this module is arranged in a RRC layer of the terminal shown in FIG. 2 and configured to perform at least one of following operations:
receiving a first task requirement from the base station and issuing the first task requirement to the second function module;
sending a second task requirement generated by the second function module itself to the base station through the RRC layer;
receiving one or more configurations, that are sent by the base station, of configurations including the first AI model and algorithm, the data acquisition requirement, the data preprocessing mode, the AI task configuration, and the AI model evaluation indexes, and sending the one or more configurations to the configuration receiving unit 51; or
sending at least one of the acquired data, labels, AI model evaluation results or AI model parameters to the base station.

In an embodiment, the terminal may further include a MAC layer function module, this module is arranged in a MAC layer of the terminal shown in FIG. 2 and configured to perform at least one of following operations:
receiving a third task requirement from the base station and issuing the third task requirement to the second function module;
sending a fourth task requirement generated by the second function module itself to the base station through the MAC layer;
receiving one or more configurations, that are sent by the base station, of configurations including the first AI model and algorithm, the data acquisition requirement, the data preprocessing mode, the AI task configuration, and the AI model evaluation indexes, and sending the one or more configurations to the configuration receiving unit 51; or
sending at least one of the acquired data, labels, AI model evaluation results or AI model parameters to the base station.

Furthermore, in an actual application, the terminal may further include other access protocol layer modules, the other access protocol layer modules may specifically include a PDCP layer function module, a Radio Link Control (RLC) layer function module, or the like, and these function modules may be configured to perform at least one of following operations:
issuing a sixth task requirement to the second function module; or
acquiring data according to the data acquisition requirement generated by the second function module, and feeding back to the second function module.

It may be seen from the above descriptions that at the terminal side, protocol layers interacting with the second function module include one or more of RRC, MAC or other access protocol layers.
1) RRC: a. RRC of the terminal sends a corresponding task requirement (such as optimization goal or requirement) to the second function module, or the second function module generates a corresponding task requirement, feeds back the corresponding task requirement to the first function module at the base station side through the RRC layer. b. RRC of the terminal acquires data and reports to the terminal according to the configuration. The second function module receives the data acquisition configuration carried by RRC signaling at the network side, processes the acquired data, generates the acquired data and labels according to the data acquisition requirement, and sends the acquired data and labels to the access network through RRC of the terminal. c. RRC of the terminal receives initial configuration of the AI model of the first function module at the base station side through the RRC layer.
2) MAC: MAC of the terminal receives the data acquisition requirement sent by MAC at the network side and/or AI model parameters interacted with other nodes, and notifies the second function module. The MAC layer of the terminal is responsible for interaction between the AI model at the network side, acquiring and collecting data of the terminal, and reporting through MAC data packets.
3) Other access protocol layers: acquire data according to the corresponding data acquisition requirement generated by the second function module of the terminal, and feed back to the endogenous AI module.

In an actual application, the second function module, the RRC layer function module, the MAC layer function module and other access protocol layer modules may be implemented by a processor in the terminal in combination with a transceiver.

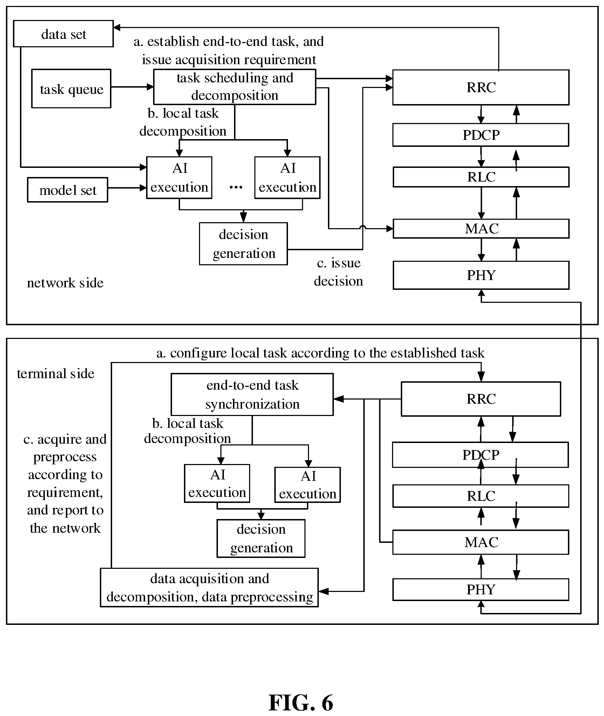

FIG. 6 shows an example of an AI endogenous overall architecture provided in an embodiment of the disclosure. In the embodiment of the disclosure, the AI task control to the terminal includes: the network, as a manager of the AI task, is responsible for functions such as AI task management of the terminal, data acquisition and data preprocessing configuration, model synchronization, etc.

The AI task management of the terminal specifically includes: determining a task currently required to be performed by the network through an external or internal optimization task, such as externally triggered load balancing or resource allocation optimization from interior of the network; selecting the corresponding model and algorithm; and configuring the corresponding model and algorithm to the local position and the terminal. The network side sends initial configuration of the AI task configuration to the terminal side, and the terminal establishes an AI task after receiving the configuration information, and decomposes a local task to one or more AI training and inference executors for calculation. The initial configuration and reconfiguration of the AI task, selection of the AI model and algorithm, data acquisition and preprocessing configuration may be sent to the terminal through RRC signaling or MAC Control Element (CE).

Data acquisition and report specifically includes: according to the acquisition requirement of the AI task, the terminal follows a specified data processing mode, and a data acquirer preprocesses and cleans data. Furthermore, according to a predefined or configured format, data packets of acquired data are formed and sent to the network. The data acquisition result may be transmitted through data packets of the protocol layer or control units such as MAC CE, RLC control packets, PDCP control packets and RRC data packets.

AI function execution specifically includes an AI endogenous algorithm and calculation part which trains or predicts the model according to model and algorithm configurations of the AI task and according to a training data set of the acquired data, or gives a corresponding decision. The AI function execution further includes synchronous maintenance of model parameters during AI training. For example, in a federated learning scenario, the network needs to calculate global parameters according to parameters reported by each terminal, and then issue the global parameters to each terminal. Synchronization of the model parameters may be transmitted in form of RRC signaling or MAC CE.

The decision generation specifically includes: determining a final decision according to a result obtained from the AI function execution, such as network configuration, resource allocation result, or channel estimation at the physical layer, etc. Decision related to the terminal may be notified to a peer side through RRC signaling or MAC CE.

The data management specifically includes: using a unified database (which may be divided into three parts, i.e., AI task queue, algorithm set, and data set) used in the embodiments of the disclosure, to provide data storage services for these data through the database. The AI task queue indicates that when tasks required externally or internally are received, in a case that there is no way for the network to execute the tasks immediately at that time, the tasks may be cached in the AI task queue and processed according to priorities of the tasks. The Algorithm set: it is a total set of algorithms available in the system, a task scheduling and decomposition module determines the model and algorithm used by each task, and the AI function executor obtains the corresponding model and algorithm from the set. Furthermore, the algorithm set may also save trained models and algorithms, to facilitate direct inference or issue to the terminal to perform inference by the terminal. The data set saves data which has been processed by the terminal or the network itself according to data acquisition and processing requirements of the AI task. This part of data includes user status such as user throughput or the like, common information such as cell status or the like, and specific information required for each task, such as trajectory of a certain user, etc.

In the architecture shown in FIG. 6, a process of an example of switching optimization is as follows.
1) The access network receives switching optimization task requirement, saves the requirement in the task queue, schedules the task queue, establishes an AI task for the terminal (switching optimization), and sends RRC signaling to the terminal, RRC signaling includes configuring the AI model, and notifying UE to acquire position information and channel quality information. At the network side, the first function module executes the AI model.
2) After receiving RRC signaling, the terminal sends the task configuration to the first function module, and the first function module executes AI function according to the AI model configuration and acquisition configuration, acquires data, and notifies to the access network through RRC signaling and/or MAC data packets.
3) The access network receives RRC signaling/MAC data packets, parses the data acquisition result, saves the acquired data in the data management, and obtains the corresponding decision through AI model training and inference. Furthermore, the access network saves the trained AI module to the model library.
4) The first function module verifies whether the current decision is feasible, and when the current decision is feasible, the first function module issues the decision to RRC signaling to be configured to the terminal.
5) The terminal receives the decision and performs AI task evaluation. When evaluation performance is not met, the first function module triggers switching optimization requirement and sends the requirement to the access network through RRC signaling.
6) The above operations 1) to 5) are repeated, until the decision meets evaluation or reaches a maximum number of adjustments.

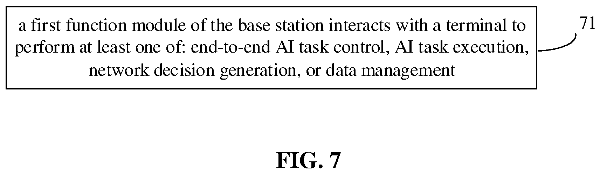

FIG. 7 shows an AI task control method provided in an embodiment of the disclosure, the method is applied to a base station, and includes the following operation 71.

At 71, a first function module of the base station performs AI task control for a terminal, AI task execution, network decision generation, and data management by interacting with the terminal.

Through the above operation, the embodiment of the disclosure implements an intelligent endogenous network and improves intelligence of the network, based on utilizing computing power of the terminal.

In an embodiment, the AI task control may include that:
the first function module determines one or more configurations of configurations inlcuding a first AI model and algorithm required to be used, data acquisition requirement, data preprocessing mode, AI task configuration, and AI model evaluation indexes according to external or internal task requirement of the base station, and configures the one or more configurations to at least the terminal or a local position, and receives at least a data acquisition result or AI model evaluation result sent by the terminal.

In an embodiment, the AI task execution may include that:
the first function module generates a corresponding execution result based on the data acquisition result according to the first AI model and algorithm.

In an embodiment, the network decision generation may include that:
the first function module generates network decision according to an execution result generated by an AI task execution unit.

In an embodiment, the data management may include that:
the first function module maintains a task queue of AI tasks, an AI model and algorithm library, and an acquired data set.

In an embodiment, the above method may further include the following operations.

The first function module forms an AI model library for executing the task requirement according to the task requirement, determines the AI model evaluation indexes including at least model convergence time or prediction accuracy to evaluate AI models in the AI model library, so as to determine the first AI model required to be used.

In an embodiment, the above method may further include the following operations.

The first function module sends the data acquisition requirement to a corresponding module in the base station, receives the data acquisition result sent by the module in the base station, and sends the network decision to the corresponding module in the base station.

In an embodiment, the above method may further include the following operations.

The first function module determines other network elements required to participate in calculation of the task requirement, schedules and controls the other network elements to participate in a training task of the first AI model, and performs synchronization of the first AI model and transmission of model parameters between the base station and the other network elements.

In an embodiment, the above method may further include the following operations.

The first function module performs at least one of following operations through interacting with a RRC layer function module of the base station:
sending, by the RRC layer function module, a first task request to the terminal;
receiving a second task requirement from the terminal forwarded by the RRC layer function module;
sending, by the RRC layer function module, one or more configurations of configurations including the first AI model and algorithm, the data acquisition requirement, the data preprocessing mode, the AI task configuration, and the AI model evaluation indexes to the terminal;
sending, by the RRC layer function module, network decision for the second task requirement to the terminal; or
receiving, at least one of data, labels, AI model evaluation results or AI model parameters sent by the terminal or other network element nodes and forwarded by the RRC layer function module.

In an embodiment, the above method may further include the following operations.

The first function module performs at least one of following operations through interacting with a MAC layer function module of the base station:
sending, by the MAC layer function module, a third task reqirement to the terminal;
receiving a fourth task requirement from the terminal forwarded by the MAC layer function module;
sending, by the MAC layer function module, one or more configurations of configurations including the first AI model and algorithm, the data acquisition requirement, the data preprocessing mode, the AI task configuration, and the AI model evaluation indexes to the terminal;
sending, by the MAC layer function module, network decision for the second task requirement to the terminal; or
receiving at least one of data, labels, AI model evaluation results or AI model parameters sent by the terminal or other network element nodes and forwarded by the MAC layer function module.

In an embodiment, the base station may further include other protocol layer modules configured to perform at least one of following operations:
issuing a fifth task requirement to the first function module; or
receiving network decision for the third task requirement fed back by the first function module.

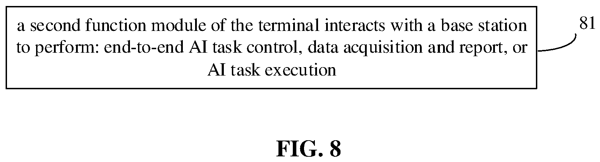

FIG. 8 shows an AI task control method provided in an embodiment of the disclosure, the method is applied to a terminal, and includes the following operation 81.

At 81, a second function module of the terminal performs the following functions through interacting with a base station: AI task control to the terminal, data acquisition and report, and AI task execution.

Through the above operation, the embodiment of the disclosure may implement an intelligent endogenous network and improves intelligence of the network, by utilizing computing power of the terminal.

In an embodiment, the AI task control may include that:
the second function module receives one or more configurations, that are sent by the base station, of configurations including a first AI model and algorithm, data acquisition requirement, data preprocessing mode, AI task configuration, and AI model evaluation indexes.

In an embodiment, the AI task execution (that is, executing the AI task) includes :
the second function module executing an AI task according to the first AI model and algorithm configured by the base station, and generating an inference result; performing evaluation according to the AI model evaluation indexes configured by the base station, obtaining at least AI model evaluation results or AI model parameters and sending at least the AI model evaluation results or AI model parameters to the base station;
the second function module performing AI model synchronization between the terminal and the base station.

In an embodiment, the data acquisition and report may include that:
the second function module acquires data according to the data acquisition requirement and the data preprocessing mode, generates at least acquired data or labels, and reports at least the acquired data or labels to the base station.

In an embodiment, the method may further include the following operations.

The second function module performs at least one of following operations through interacting with a RRC layer function module of the terminal:
receiving a first task requirement from the base station forwarded by the RRC layer function module;
sending, by the RRC layer function module, a second task requirement generated by the second function module itself to the base station;
receiving one or more configurations, that are sent from the base station forwarded by the RRC layer function module, of configurations including the first AI model and algorithm, the data acquisition requirement, the data preprocessing mode, the AI task configuration, and the AI model evaluation indexes; or
sending, by the RRC layer function module, at least one of the acquired data, labels, AI model evaluation results or AI model parameters to the base station.

In an embodiment, the method may further include the following operations.

The second function module performs at least one of following operations through interacting with a MAC layer function module of the terminal:
receiving a third task requirement from the base station forwarded by the MAC layer function module;
sending, by the MAC layer function module, a fourth task requirement generated by the second function module itself to the base station;
receiving one or more configurations, that are sent from the base station forwarded by the MAC layer function module, of configurations including the first AI model and algorithm, the data acquisition requirement, the data preprocessing mode, the AI task configuration, and the AI model evaluation indexes, and sending the one or more configurations to the configuration receiving unit; or
sending, by the MAC layer function module, at least one of the acquired data, labels, AI model evaluation results or AI model parameters to the base station.

In an embodiment, the terminal may further include other access protocol layer modules configured to perform at least one of following operations:
issuing a sixth task requirement to the second function module; or
acquiring data according to the data acquisition requirement generated by the second function module, and feeding back to the second function module.

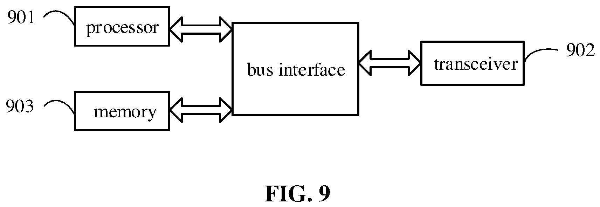

FIG. 9 shows a base station provided in an embodiment of the disclosure, the base station includes a processor 901, a transceiver 902, a memory 903, and a bus interface.

In the embodiment of the disclosure, the base station further includes a program stored on the memory 903 and executable on the processor 901, the program implements the following operations when the program is executed by the processor 901.

A first function module of the base station performs AI task control for a terminal, AI task execution, network decision generation, and data management by interacting with the terminal.

In an embodiment, the following operations are also implemented when the processor executes the program:
determining one or more configurations of configurations including a first AI model and algorithm required to be used, data acquisition requirement, data preprocessing mode, AI task configuration, and AI model evaluation indexes according to external or internal task requirement of the base station, and configuring the one or more configurations to at least the terminal or a local position, and receiving at least a data acquisition result or AI model evaluation result sent by the terminal;
generating a corresponding execution result based on the data acquisition result according to the first AI model and algorithm;
generating network decision according to the execution result generated by the AI task execution unit; or
maintaining a task queue of AI tasks, an AI model and algorithm library, and an acquired data set.

In an embodiment, the following operations are also implemented when the processor executes the program.

The first function module is used to form an AI model library for executing the task requirement according to the task requirement, determine the AI model evaluation indexes including at least model convergence time or prediction accuracy to evaluate AI models in the AI model library, so as to determine the first AI model required to be used.

In an embodiment, the following operations are also implemented when the processor executes the program.

The first function module sends the data acquisition requirement to a corresponding module in the base station, and receives the data acquisition result sent by the module in the base station, and sends the network decision to the corresponding module in the base station.

In an embodiment, the following operations are also implemented when the processor executes the program.

The first function module determines other network elements required to participate in calculation of the task requirement, schedules and controls the other network elements to participate in a training task of the first AI model, and performs synchronization of the first AI model and transmission of model parameters between the base station and the other network elements.

In an embodiment, the following operations are also implemented when the processor executes the program.

The first function module performs at least one of following operations through interacting with a RRC layer function module of the base station:
sending, by the RRC layer function module, a first task request to the terminal;
receiving a second task requirement from the terminal forwarded by the RRC layer function module;
sending, by the RRC layer function module, one or more configurations of configurations including the first AI model and algorithm, the data acquisition requirement, the data preprocessing mode, the AI task configuration, and the AI model evaluation indexes to the terminal;
sending, by the RRC layer function module, network decision for the second task requirement to the terminal; or
receiving, at least one of data, labels, AI model evaluation results or AI model parameters sent by the terminal or other network element nodes and forwarded by the RRC layer function module.

In an embodiment, the following operations are also implemented when the processor executes the program.

The first function module performs at least one of following operations through interacting with a MAC layer function module of the base station:
sending, by the MAC layer function module, a third task reqirement to the terminal;
receiving a fourth task requirement from the terminal forwarded by the MAC layer function module;
sending, by the MAC layer function module, one or more configurations of configurations including the first AI model and algorithm, the data acquisition requirement, the data preprocessing mode, the AI task configuration, and the AI model evaluation indexes to the terminal;
sending, by the MAC layer function module, network decision for the second task requirement to the terminal; or
receiving at least one of data, labels, AI model evaluation results or AI model parameters sent by the terminal or other network element nodes and forwarded by the MAC layer function module.

In an embodiment, the following operations are also implemented when the processor executes the program.

Other protocol layer modules perform at least one of following operations:
issuing a fifth task requirement to the first function module; or
receiving network decision for the third task requirement fed back by the first function module.

It may be understood that in the embodiments of the disclosure, when the computer program is executed by the processor 901, various processes of the above method embodiment shown in FIG. 7 may be implemented, and the same technical effect may be achieved, which are not elaborated here to avoid repetition.

In FIG. 9, a bus architecture may include any number of interconnected buses and bridges, specifically, one or more processors represented by the processor 901 and various circuits of memory represented by the memory 903 are linked together. In an actual application, the bus architecture may further link various other circuits such as peripheral devices, voltage stabilizers, power management circuits or the like together, which are not further described in the disclosure. The bus interface provides interfaces. The transceiver 902 may include multiple elements, that is, include a transmitter and a receiver, provide units communicating with various other devices over transmission media.

The processor 901 is responsible for managing the bus architecture and general processing, and the memory 903 may store data used by the processor 901 when it performs operations.

It should be noted that the terminal in the embodiment is a device corresponding to the above method shown in FIG. 7, and implementations in the above embodiments are all applicable to the embodiment of the terminal, and the same technical effect may also be achieved. In the device, the transceiver 902 and the memory 903 as well as the transceiver 902 and the processor 901 may be communicatively connected through the bus interface, functions of the processor 901 may also be implemented by the transceiver 902, and functions of the transceiver 902 may also be implemented by the processor 901. What needs to be explained here is that the above device provided in the embodiment of the disclosure may implement all method operations implemented by the above method embodiments, and may achieve the same technical effect. The parts in the embodiment which are the same as the method embodiments and advantageous effects thereof are not described in detail here.

In some embodiments of the disclosure, there is also provided a computer-readable storage medium, having stored thereon a program, the program implements the following operations when the program is executed by a processor.

A first function module of a base station performs AI task control for a terminal, AI task execution, network decision generation, and data management by interacting with the terminal.

When the program is executed by the processor, all implementations in the above AI task control method applied to the base station side may be implemented, and the same technical effect may be achieved, which are not elaborated here to avoid repetition.

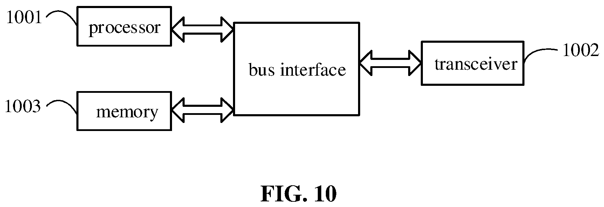

FIG. 10 shows a structure of a terminal provided in an embodiment of the disclosure. The terminal includes a processor 1001, a transceiver 1002, a memory 1003, and a bus interface.

In the embodiment of the disclosure, the terminal further includes a program stored on the memory 1003 and executable on the processor 1001.

The following operations are implemented when the processor 1001 executes the program.

A second function module of the terminal performs the following functions through interacting with a base station: AI task control to the terminal, data acquisition and report, AI task execution.

In an embodiment, when the processor executes the program, the following operations are also implemented
receiving one or more configurations, that are sent by the base station, of configurations including a first AI model and algorithm, data acquisition requirement, data preprocessing mode, AI task configuration, and AI model evaluation indexes;
executing an AI task according to the first AI model and algorithm configured by the base station, and generating an inference result; performing evaluation according to the AI model evaluation indexes configured by the base station, obtaining at least AI model evaluation results or AI model parameters and sending at least the AI model evaluation results or AI model parameters to the base station;
performing AI model synchronization between the terminal and the base station; or
acquiring data according to the data acquisition requirement and the data preprocessing mode, generating at least acquired data or labels, and reporting at least the acquired data or labels to the base station.

In an embodiment, the following operations are also implemented when the processor executes the program.

The second function module performs at least one of following operations through interacting with a RRC layer function module of the terminal:
receiving a first task requirement from the base station forwarded by the RRC layer function module;
sending, by the RRC layer function module, a second task requirement generated by the second function module itself to the base station;
receiving one or more configuration, that are sent from the base station forwarded by the RRC layer function module, of configurations including the first AI model and algorithm, the data acquisition requirement, the data preprocessing mode, the AI task configuration, and the AI model evaluation indexes; or
sending, by the RRC layer function module, at least one of the acquired data, labels, AI model evaluation results or AI model parameters to the base station.

In an embodiment, the following operations are also implemented when the processor executes the program.

The second function module performs at least one of following operations through interacting with a MAC layer function module of the terminal:
receiving a third task requirement from the base station forwarded by the MAC layer function module;
sending, by the MAC layer function module, a fourth task requirement generated by the second function module itself to the base station;
receiving one or more configurations, that are sent from the base station forwarded by the MAC layer function module, of configurations including the first AI model and algorithm, the data acquisition requirement, the data preprocessing mode, the AI task configuration, and the AI model evaluation indexes, and sending the one or more configurations to the configuration receiving unit; or
sending, by the MAC layer function module, at least one of the acquired data, labels, AI model evaluation results or AI model parameters to the base station.

In an embodiment, the following operations are also implemented when the processor executes the program.

Other access protocol layer modules perform at least one of following operations:
issuing a sixth task requirement to the second function module; or
acquiring data according to the data acquisition requirement generated by the second function module, and feeding back to the second function module.

It may be understood that in the embodiments of the disclosure, when the computer program is executed by the processor 1001, various processes of the above method embodiment shown in FIG. 8 may be implemented, and the same technical effect may be achieved, which are not elaborated here to avoid repetition.

In FIG. 10, a bus architecture may include any number of interconnected buses and bridges, specifically, one or more processors represented by the processor 1001 and various circuits of memory represented by the memory 1003 are linked together. In an actual application, the bus architecture may further link various other circuits such as peripheral devices, voltage stabilizers, power management circuits or the like together, which are not further described in the disclosure. The bus interface provides interfaces. The transceiver 1002 may include multiple elements, that is, include a transmitter and a receiver, provide units communicating with various other devices over transmission media.

In an actual application, the terminal may further include user interfaces. In case of different user devices, the user interfaces may further include interfaces which may be connected to required devices externally or internally. The connected devices include, but are not limited to a keypad, display, speaker, microphone, joystick, etc.

The processor 1001 is responsible for managing the bus architecture and general processing, and the memory 1003 may store data used by the processor 1001 when it performs operations.

It should be noted that the device in the embodiment is a device corresponding to the above method shown in FIG. 8, and implementations in the above embodiments are all applicable to the embodiment of the device, and the same technical effect may also be achieved. In the device, the transceiver 1002 and the memory 1003 as well as the transceiver 1002 and the processor 1001 may be communicatively connected through the bus interface, functions of the processor 1001 may also be implemented by the transceiver 1002, and functions of the transceiver 1002 may also be implemented by the processor 1001. What needs to be explained here is that the above device provided in the embodiment of the disclosure may implement all method operations implemented by the above method embodiments, and may achieve the same technical effect. The parts in the embodiment which are the same as the method embodiments and advantageous effects thereof are not described in detail here.

In some embodiments of the disclosure, there is also provided a computer-readable storage medium, having stored thereon a program, the program implements the following operations when the program is executed by a processor.

A second function module of the terminal performs the following functions through interacting with a base station: AI task control to the terminal, data acquisition and report, AI task execution.

When the program is executed by the processor, all implementations in the above AI task control method applied to the terminal side may be implemented, and the same technical effect may be achieved, which are not elaborated here to avoid repetition.

It may be appreciated by those of ordinary skill in the art that units and algorithm operations of the examples described in combination with the embodiments disclosed in the disclosure may be implemented by electronic hardware or a combination of computer software and electronic hardware. Whether these functions are executed in form of hardware or software, depends on specific application and design constraints of the technical solution. Professional technicians may use different methods for each specific application to implement the described functions, however, such implementation should not be considered as going beyond the scope of the disclosure.

It may be clearly understood by those skilled in the art that for the convenience and brevity of descriptions, specific operation processes of the above system, device and unit may refer to corresponding processes in the foregoing method embodiments, which are not elaborated here.

In the embodiments provided in the disclosure, it should be understood that the disclosed devices and methods may be implemented in other ways. For example, the above device embodiments are only illustrative. For example, division of the units is only a logical function division. In an actual implementation, there may be other division modes. For example, multiple units or components may be combined or may be integrated into another system, or some features may be ignored, or may not be implemented. Furthermore, mutual coupling or direct coupling or communicative connection as shown or discussed may be indirect coupling or communicative connection through some interfaces, devices or units, may be in electrical, mechanical or other forms.

The units described as separate components may be or may not be physically separated, and the components shown as units may be or may not be physical units, that is, they may be located in a place, or may be distributed to multiple network units. Part or all of the units may be selected according to actual requirements to achieve the purpose of solutions of the embodiments of the disclosure.

Furthermore, each function unit in each embodiment of the disclosure may be integrated into a processing unit, or each unit may separately exist physically, or two or more units may be integrated into a unit.

When the functions are implemented in form of software function units and sold or used as an independent product, the functions may be stored in a computer-readable storage medium. Based on such understanding, the technical solutions of the disclosure substantially or parts making contributions to the related art or part of the technical solutions may be embodied in form of software product, and the computer software product is stored in a storage medium, includes several instructions to enable a computer device (which may be a personal computer, a server, a network device, etc.) to execute all or part of operations of the method described in each embodiment of the disclosure. The foregoing storage medium includes various media capable of storing program codes such as a U disk, a mobile hard disk, a Read Only Memory (ROM), a Random Access Memory (RAM), a magnetic disk, or an optical disk, etc.

The above descriptions are only specific implementations of the disclosure, however, the scope of protection of the disclosure is not limited thereto. Any variation or replacement easily conceived by those skilled in the art within the technical scope disclosed in the disclosure, should be covered in the scope of protection of the disclosure. Therefore, the scope of protection of the disclosure should be subjected to the scope of protection of the claims.

## Claims

1. An Artificial Intelligence, AI, task control method, applied to a base station, comprising:
performing (71), by a first function module of the base station, AI task control for the terminal, AI task execution, network decision generation, and data management by interacting with a terminal;
**characterized by** further comprising:
determining, by an AI task control unit of the first function module, configurations comprising a first AI model and algorithm required to be used, data acquisition requirement, data preprocessing mode, AI task configuration, and AI model evaluation indexes, configuring the one or more configurations to at least the terminal, and receiving at least a data acquisition result and AI model evaluation result sent by the terminal,
generating, by an AI task execution unit of the first function module, a corresponding execution result based on the data acquisition result according to the first AI model and algorithm,
generating, by a network decision generation unit of the first function module, network decision according to an execution result, and
maintaining, by a data management unit of the first function module, at least one of a task queue of AI tasks, an AI model and algorithm library, or an acquired data set.

2. The method of claim 1, further comprising:
forming, by the first function module, an AI model library; and determining, by the first function module, the AI model evaluation indexes comprising at least model convergence time or prediction accuracy to evaluate AI models in the AI model library, so as to determine the first AI model required to be used.

3. The method of claim 1, further comprising:
sending, by the first function module, the data acquisition requirement to a corresponding module in the base station, and receiving, by the first function module, the data acquisition result sent by the corresponding module in the base station; and sending, by the first function module, the network decision to the corresponding module in the base station.

4. The method of claim 1, further comprising:
determining, by the first function module, other network elements required to participate in calculation of the task requirement; scheduling and controlling, by the first function module, the other network elements to participate in a training task of the first AI model; and performing, by the first function module, synchronization of the first AI model and transmission of model parameters between the base station and the other network elements.

5. The method of claim 1, further comprising:
performing, by the first function module through interacting with a Radio Resource Control, RRC, layer function module of the base station, at least one of:
sending, by the RRC layer function module, a first task requirement to the terminal;
receiving a second task requirement from the terminal forwarded by the RRC layer function module;
sending, by the RRC layer function module, one or more configurations of configurations comprising the first AI model and algorithm, the data acquisition requirement, the data preprocessing mode, the AI task configuration, and the AI model evaluation indexes to the terminal;
sending, by the RRC layer function module, network decision for the second task requirement to the terminal; or
receiving, at least one of data, labels, AI model evaluation results or AI model parameters sent by the terminal or other network element nodes and forwarded by the RRC layer function module.

6. The method of claim 1, further comprising:
performing, by the first function module through interacting with a Media Access Control, MAC, layer function module of the base station, at least one of:
sending, by the MAC layer function module, a third task requirement to the terminal;
receiving a fourth task requirement from the terminal forwarded by the MAC layer function module;
sending, by the MAC layer function module, one or more configurations of configurations comprising the first AI model and algorithm, the data acquisition requirement, the data preprocessing mode, the AI task configuration, and the AI model evaluation indexes to the terminal;
sending, by the MAC layer function module, network decision for the second task requirement to the terminal; or
receiving at least one of data, labels, AI model evaluation results or AI model parameters sent by the terminal or other network element nodes and forwarded by the MAC layer function module.

7. An Artificial Intelligence, AI, task control method, applied to a terminal, comprising:
performing (81), by a second function module of the terminal, AI task control for the terminal, data acquisition and report, and AI task execution by interacting with a base station;
**characterized by** further comprising:
receiving, by a configuration receiving unit of the second function module, configurations comprising: a first AI model and algorithm, data acquisition requirement, data preprocessing mode, AI task configuration, and AI model evaluation indexes that are sent by the base station,
executing, by an AI task execution unit of the second function module, an AI task according to the first AI model and algorithm configured by the base station, and generating an inference result; performing evaluation according to the AI model evaluation indexes configured by the base station, obtaining at least AI model evaluation results and AI model parameters and sending at least the AI model evaluation results and AI model parameters to the base station;
performing, by the AI task execution unit of the second function module, AI model synchronization between the terminal and the base station, and
acquiring, by a data acquisition and report unit of the second function module, data according to the data acquisition requirement and the data preprocessing mode, generating at least acquired data and labels, and reporting at least the acquired data and labels to the base station.

8. The method of claim 7, further comprising:
performing, by the second function module through interacting with a Radio Resource Control, RRC, layer function module of the terminal, at least one of:
receiving a first task requirement from the base station forwarded by the RRC layer function module;
sending, by the RRC layer function module, a second task requirement generated by the second function module itself to the base station;
receiving one or more configurations, that are sent from the base station and forwarded by the RRC layer function module, of configurations comprising the first AI model and algorithm, the data acquisition requirement, the data preprocessing mode, the AI task configuration, and the AI model evaluation indexes; or
sending, by the RRC layer function module, at least one of the acquired data, labels, AI model evaluation results or AI model parameters to the base station.

9. The method of claim 7, further comprising:
performing, by the second function module through interacting with a Media Access Control, MAC, layer function module of the terminal, at least one of:
receiving a third task requirement which is sent from the base station forwarded by the MAC layer function module;
sending a fourth task requirement generated by the second function module itself to the base station;
receiving one or more configurations, that are sent from the base station and forwarded by the MAC layer function module, of configurations comprising the first AI model and algorithm, the data acquisition requirement, the data preprocessing mode, the AI task configuration, and the AI model evaluation indexes, and sending the one or more configurations to the configuration receiving unit; or
sending, by the MAC layer function module, at least one of the acquired data, labels, AI model evaluation results or AI model parameters to the base station.

10. A base station, comprising a processor (901), a memory (903), and a program stored on the memory (903) and executable on the processor (901), the program implementing the method of any one of claims 1 to 6 when the program is executed by the processor (901).

11. A terminal, comprising a processor (1001), a memory (1003), and a program stored on the memory (1003) and executable on the processor (1001), the program implementing ef the method of any one of claims 7 to 9 when the program is executed by the processor (1001).

12. A computer-readable storage medium having stored thereon a computer program that when executed by a processor, implements the method of any one of claims 1 to 6

13. A computer-readable storage medium having stored thereon a computer program that when executed by a processor, implements the method of any one of claims 7 to 9

## Patentansprüche

1. Aufgabensteuerungsverfahren für künstliche Intelligenz, KI, das auf eine Basisstation angewendet wird, umfassend:
Durchführen (71), durch ein erstes Funktionsmodul der Basisstation, einer KI-Aufgabensteuerung für das Endgerät, einer KI-Aufgabenausführung, einer Netzwerkentscheidungserzeugung und einer Datenverwaltung durch Interagieren mit einem Endgerät;
**gekennzeichnet dadurch, dass** es ferner umfasst:
Bestimmen, durch eine KI-Aufgabensteuerungseinheit des ersten Funktionsmoduls, von Konfigurationen, umfassend ein(en) erstes/n KI-Modell und -Algorithmus, das für die Verwendung erforderlich ist, eine Datenerfassungsanforderung, einen Datenvorverarbeitungsmodus, eine KI-Aufgabenkonfiguration und KI-Modell-Bewertungsindizes, Konfigurieren der einen oder der mehreren Konfigurationen für mindestens das Endgerät oder die Basisstation selbst, und Empfangen mindestens eines Datenerfassungsergebnisses und eines KI-Modell-Bewertungsergebnisses, die durch das Endgerät gesendet werden,
Erzeugen, durch eine KI-Aufgabenausführungseinheit des ersten Funktionsmoduls, eines entsprechenden Ausführungsergebnisses basierend auf dem Datenerfassungsergebnis gemäß dem ersten KI-Modell und -Algorithmus,
Erzeugen, durch eine Netzwerkentscheidungserzeugungseinheit des ersten Funktionsmoduls, einer Netzwerkentscheidung gemäß einem Ausführungsergebnis, und
Verwalten, durch eine Datenverwaltungseinheit des ersten Funktionsmoduls, von mindestens einem von einer Aufgabenwarteschlange von KI-Aufgaben, einer KI-Modell- und Algorithmusbibliothek oder einem erfassten Datensatz.

2. Verfahren nach Anspruch 1, ferner umfassend:
Ausbilden, durch das erste Funktionsmodul, einer KI-Modellbibliothek; und Bestimmen, durch das erste Funktionsmodul, der KI-Modell-Bewertungsindizes, umfassend mindestens Modellkonvergenzzeit oder Vorhersagegenauigkeit, um KI-Modelle in der KI-Modell-Bibliothek zu bewerten, um das erste KI-Modell zu bestimmen, das für die Verwendung erforderlich ist.

3. Verfahren nach Anspruch 1, ferner umfassend:
Senden, durch das erste Funktionsmodul, der Datenerfassungsanforderung an ein entsprechendes Modul in der Basisstation, und Empfangen, durch das erste Funktionsmodul, des Datenerfassungsergebnisses, das durch das entsprechende Modul in der Basisstation gesendet wird; und Senden, durch das erste Funktionsmodul, der Netzwerkentscheidung an das entsprechende Modul in der Basisstation.

4. Verfahren nach Anspruch 1, ferner umfassend:
Bestimmen, durch das erste Funktionsmodul, anderer Netzwerkelemente, die für eine Teilnahme an der Berechnung der Aufgabenanforderung erforderlich sind; Planen und Steuern, durch das erste Funktionsmodul, der anderen Netzwerkelemente, an einer Trainingsaufgabe des ersten KI-Modells teilzunehmen; und Durchführen, durch das erste Funktionsmodul, einer Synchronisation des ersten KI-Modells und einer Übertragung von Modellparametern zwischen der Basisstation und den anderen Netzwerkelementen.

5. Verfahren nach Anspruch 1, ferner umfassend:
Durchführen, durch das erste Funktionsmodul über Interagieren mit einem Funkressourcensteuerungs-Schicht-Funktionsmodul, RRC-Schicht-Funktionsmodul, der Basisstation, von mindestens einem von:
Senden, durch das RRC-Schicht-Funktionsmodul, einer ersten Aufgabenanforderung an das Endgerät;
Empfangen einer zweiten Aufgabenanforderung von dem Endgerät, das durch das RRC-Schicht-Funktionsmodul weitergeleitet wird;
Senden, durch das RRC-Schicht-Funktionsmodul, einer oder mehrerer Konfigurationen von Konfigurationen, umfassend das/den erste(n) KI-Modell und -Algorithmus, die Datenerfassungsanforderung, den Datenvorverarbeitungsmodus, die KI-Aufgabenkonfiguration und die KI-Modell-Bewertungsindizes, an das Endgerät;
Senden, durch das RRC-Schicht-Funktionsmodul, einer Netzwerkentscheidung für die zweite Aufgabenanforderung an das Endgerät; oder
Empfangen von mindestens einem von Daten, Labels, KI-Modell-Bewertungsergebnissen oder KI-Modell-Parametern, die durch das Endgerät oder andere Netzwerkelementknoten gesendet und durch das RRC-Schicht-Funktionsmodul weitergeleitet werden.

6. Verfahren nach Anspruch 1, ferner umfassend:
Durchführen, durch das erste Funktionsmodul über Interagieren mit einem Medienzugriffssteuerungs-Schicht-Funktionsmodul, MAC-Schicht-Funktionsmodul, der Basisstation, von mindestens einem von:
Senden, durch das MAC-Schicht-Funktionsmodul, einer dritten Aufgabenanforderung an das Endgerät;
Empfangen einer vierten Aufgabenanforderung von dem Endgerät, das durch das MAC-Schicht-Funktionsmodul weitergeleitet wird;
Senden, durch das MAC-Schicht-Funktionsmodul, einer oder mehrerer Konfigurationen von Konfigurationen, umfassend das/den erste(n) KI-Modell und - Algorithmus, die Datenerfassungsanforderung, den Datenvorverarbeitungsmodus, die KI-Aufgabenkonfiguration und die KI-Modell-Bewertungsindizes, an das Endgerät;
Senden, durch das MAC-Schicht-Funktionsmodul, einer Netzwerkentscheidung für die zweite Aufgabenanforderung an das Endgerät; oder
Empfangen mindestens eines von Daten, Labels, KI-Modell-Bewertungsergebnissen oder KI-Modell-Parametern, die durch das Endgerät oder anderen Netzwerkelementknoten gesendet und durch das MAC-Schicht-Funktionsmodul weitergeleitet werden.

7. Aufgabensteuerungsverfahren für künstliche Intelligenz, KI, das auf ein Endgerät angewendet wird, umfassend:
Durchführen (81), durch ein zweites Funktionsmodul des Endgeräts, der KI-Aufgabensteuerung für das Endgerät, einer Datenerfassung und -meldung und der KI-Aufgabenausführung durch Interagieren mit einer Basisstation;
**gekennzeichnet dadurch, dass** es ferner umfasst:
Empfangen, eine Konfigurationsempfangseinheit des zweiten Funktionsmoduls, von Konfigurationen, umfassend: ein(en) erstes/n KI-Modell und -Algorithmus, die Datenerfassungsanforderung, den Datenvorverarbeitungsmodus, die KI-Aufgabenkonfiguration und KI-Modell-Bewertungsindizes, die durch die Basisstation gesendet werden,
Ausführen, durch eine KI-Aufgabenausführungseinheit des zweiten Funktionsmoduls, einer KI-Aufgabe gemäß dem ersten KI-Modell und - Algorithmus, der durch die Basisstation konfiguriert ist, und Erzeugen eines Inferenzergebnisses; Durchführen einer Bewertung gemäß den KI-Modell-Bewertungsindizes, die durch die Basisstation konfiguriert sind, Erhalten von mindestens KI-Modell-Bewertungsergebnissen und KI-Modell-Parametern und Senden von mindestens den KI-Modell-Bewertungsergebnissen und KI-Modell-Parametern an die Basisstation;
Durchführen, durch die KI-Aufgabenausführungseinheit des zweiten Funktionsmoduls, einer KI-Modell-Synchronisation zwischen dem Endgerät und der Basisstation, und
Erfassen, durch eine Datenerfassungs- und -meldeeinheit des zweiten Funktionsmoduls, von Daten gemäß der Datenerfassungsanforderung und dem Datenvorverarbeitungsmodus, Erzeugen von mindestens erfassten Daten und Labels und Melden von mindestens den erfassten Daten und Labels an die Basisstation.

8. Verfahren nach Anspruch 7, ferner umfassend:
Durchführen, durch das zweite Funktionsmodul über Interagieren mit einem Funkressourcensteuerungs-Schicht-Funktionsmodul, RRC-Schicht-Funktionsmodul, des Endgeräts, von mindestens einem von:
Empfangen einer ersten Aufgabenanforderung von der Basisstation, die durch das RRC-Schicht-Funktionsmodul weitergeleitet wird;
Senden, durch das RRC-Schicht-Funktionsmodul, einer zweiten Aufgabenanforderung, die durch das zweite Funktionsmodul selbst erzeugt wird, an die Basisstation;
Empfangen einer oder mehrerer Konfigurationen, die von der Basisstation gesendet und durch das RRC-Schicht-Funktionsmodul weitergeleitet werden, von Konfigurationen, umfassend das/den erste(n) KI-Modell und -Algorithmus, die Datenerfassungsanforderung, den Datenvorverarbeitungsmodus, die KI-Aufgabenkonfiguration und die KI-Modell-Bewertungsindizes; oder
Senden, durch das RRC-Schicht-Funktionsmodul, mindestens eines der erfassten Daten, Labels, KI-Modell-Bewertungsergebnisse oder KI-ModellParameter an die Basisstation.

9. Verfahren nach Anspruch 7, ferner umfassend:
Durchführen, durch das zweite Funktionsmodul über Interagieren mit einem Medienzugriffssteuerungs-Schicht-Funktionsmodul, MAC-Schicht-Funktionsmodul, des Endgeräts, von mindestens einem von:
Empfangen einer dritten Aufgabenanforderung, die von der Basisstation gesendet und durch das MAC-Schicht-Funktionsmodul weitergeleitet wird;
Senden einer vierten Aufgabenanforderung, die durch das zweite Funktionsmodul selbst erzeugt wird, an die Basisstation;
Empfangen einer oder mehrerer Konfigurationen, die von der Basisstation gesendet und durch das MAC-Schicht-Funktionsmodul weitergeleitet werden, von Konfigurationen, umfassend das/den erste(n) KI-Modell und -Algorithmus, die Datenerfassungsanforderung, den Datenvorverarbeitungsmodus, die KI-Aufgabenkonfiguration und die KI-Modell-Bewertungsindizes, und Senden der einen oder der mehreren Konfigurationen an die Konfigurationsempfangseinheit; oder
Senden, durch das MAC-Schicht-Funktionsmodul, mindestens eines der erfassten Daten, Labels, KI-Modell-Bewertungsergebnisse oder KI-ModellParameter an die Basisstation.

10. Basisstation, umfassend einen Prozessor (901), einen Speicher (903) und ein Programm, das auf dem Speicher (903) gespeichert und auf dem Prozessor (901) ausführbar ist, wobei das Programm Schritte des Verfahrens nach einem der Ansprüche 1 bis 6 implementiert, wenn das Programm durch den Prozessor (901) ausgeführt wird.

11. Endgerät, umfassend einen Prozessor (1001), einen Speicher (1003) und ein Programm, das auf dem Speicher (1003) gespeichert und auf dem Prozessor (1001) ausführbar ist, wobei das Programm Schritte des Verfahrens nach einem der Ansprüche 7 bis 9 implementiert, wenn das Programm durch den Prozessor (1001) ausgeführt wird.

12. Computerlesbares Speicherungsmedium, das ein Computerprogramm darauf gespeichert aufweist, das, wenn es durch einen Prozessor ausgeführt wird, Schritte des Verfahrens nach einem der Ansprüche 1 bis 6 implementiert.

13. Computerlesbares Speicherungsmedium, das ein Computerprogramm darauf gespeichert aufweist, das, wenn es durch einen Prozessor ausgeführt wird, Schritte des Verfahrens nach einem der Ansprüche 7 bis 9 implementiert.

## Revendications

1. Procédé de commande de tâches d'intelligence artificielle, IA, appliqué à une station de base, comprenant :
le fait d'effectuer (71), par un premier module de fonction de la station de base, une commande de tâches d'IA pour le terminal, une exécution de tâches d'IA, une génération de décisions de réseau, et une gestion de données en interagissant avec un terminal ;
**caractérisé en ce qu'il** comprend en outre :
la détermination, par une unité de commande de tâches d'IA du premier module de fonction, de configurations comprenant un premier modèle et algorithme d'IA à utiliser, une exigence d'acquisition de données, un mode de prétraitement de données, une configuration de tâches d'IA, et des indices d'évaluation de modèles d'IA, la configuration de la ou des configurations pour au moins le terminal ou la station de base elle-même, et la réception d'au moins un résultat d'acquisition de données et d'un résultat d'évaluation de modèles d'IA envoyés par le terminal,
la génération, par une unité d'exécution de tâches d'IA du premier module de fonction, d'un résultat d'exécution correspondant sur la base du résultat d'acquisition de données conformément au premier modèle et algorithme d'IA,
la génération, par une unité de génération de décision de réseau du premier module de fonction, d'une décision de réseau en fonction d'un résultat d'exécution, et
la maintenance, par une unité de gestion de données du premier module de fonction, d'au moins l'un parmi une file d'attente de tâches d'IA, une bibliothèque de modèles et d'algorithmes d'IA, ou un ensemble de données acquis.

2. Procédé selon la revendication 1, comprenant en outre :
la formation, par le premier module de fonction, d'une bibliothèque de modèles d'IA ; et la détermination, par le premier module de fonction, des indices d'évaluation de modèles d'IA comprenant au moins le temps de convergence de modèle ou la précision de prédiction pour évaluer des modèles d'IA dans la bibliothèque de modèles d'IA, de manière à déterminer le premier modèle d'IA à utiliser.

3. Procédé selon la revendication 1, comprenant en outre :
l'envoi, par le premier module de fonction, de l'exigence d'acquisition de données à un module correspondant dans la station de base, et la réception, par le premier module de fonction, du résultat d'acquisition de données envoyé par le module correspondant dans la station de base ; et l'envoi, par le premier module de fonction, de la décision de réseau au module correspondant dans la station de base.

4. Procédé selon la revendication 1, comprenant en outre :
la détermination, par le premier module de fonction, d'autres éléments de réseau devant participer au calcul de l'exigence de tâche ; la planification et la commande, par le premier module de fonction, des autres éléments de réseau pour participer à une tâche d'entraînement du premier modèle d'IA ; et le fait d'effectuer, par le premier module de fonction, une synchronisation du premier modèle d'IA et la transmission de paramètres de modèle entre la station de base et les autres éléments de réseau.

5. Procédé selon la revendication 1, comprenant en outre :
le fait d'effectuer, par le premier module de fonction en interagissant avec un module de fonction de couche de commande de ressources radio, RRC, de la station de base, au moins l'un parmi :
l'envoi, par le module de fonction de couche RRC, d'une première exigence de tâche au terminal ;
la réception d'une deuxième exigence de tâche à partir du terminal, retransmise par le module de fonction de couche RRC ;
l'envoi, par le module de fonction de couche RRC, d'une ou de plusieurs configurations de configurations comprenant le premier modèle et algorithme d'IA, l'exigence d'acquisition de données, le mode de prétraitement de données, la configuration de tâches d'IA, et les indices d'évaluation de modèle d'IA au terminal ;
l'envoi, par le module de fonction de couche RRC, de la décision de réseau pour la deuxième exigence de tâche au terminal ; ou
la réception, d'au moins l'un parmi données, étiquettes, résultats d'évaluation de modèles d'IA ou paramètres de modèles d'IA envoyés par le terminal ou d'autres nœuds d'élément de réseau et retransmis par le module de fonction de couche RRC.

6. Procédé selon la revendication 1, comprenant en outre :
le fait d'effectuer, par le premier module de fonction en interagissant avec un module de fonction de couche de commande d'accès au support, MAC, de la station de base, au moins l'un parmi :
l'envoi, par le module de fonction de couche MAC, d'une troisième exigence de tâche au terminal ;
la réception d'une quatrième exigence de tâche à partir du terminal, retransmise par le module de fonction de couche MAC ;
l'envoi, par le module de fonction de couche MAC, d'une ou de plusieurs configurations de configurations comprenant le premier modèle et algorithme d'IA, l'exigence d'acquisition de données, le mode de prétraitement de données, la configuration de tâches d'IA, et les indices d'évaluation de modèle d'IA au terminal ;
l'envoi, par le module de fonction de couche MAC, de la décision de réseau pour la deuxième exigence de tâche au terminal ; ou
la réception, d'au moins l'un parmi données, étiquettes, résultats d'évaluation de modèles d'IA ou paramètres de modèles d'IA envoyés par le terminal ou d'autres nœuds d'élément de réseau et retransmis par le module de fonction de couche MAC.

7. Procédé de commande de tâches d'intelligence artificielle, IA, appliqué à un terminal, comprenant :
le fait d'effectuer (81), par un second module de fonction du terminal, une commande de tâches d'IA pour le terminal, une acquisition et une communication de données, et une exécution de tâches d'IA en interagissant avec une station de base ;
**caractérisé en ce qu'il** comprend en outre :
la réception, par une unité de réception de configurations du second module de fonction, de configurations comprenant : un premier modèle et algorithme d'IA, une exigence d'acquisition de données, un mode de prétraitement de données, une configuration de tâches d'IA, et des indices d'évaluation de modèles d'IA qui sont envoyés par la station de base,
l'exécution, par une unité d'exécution de tâches d'IA du second module de fonction, d'une tâche d'IA conformément aux premiers modèle et algorithme d'IA configurés par la station de base, et la génération d'un résultat d'inférence ; le fait d'effectuer une évaluation selon les indices d'évaluation de modèles d'IA configurés par la station de base, l'obtention au moins de résultats d'évaluation de modèles d'IA et de paramètres de modèles d'IA et l'envoi au moins des résultats d'évaluation de modèles d'IA et des paramètres de modèles d'IA à la station de base ;
le fait d'effectuer, par l'unité d'exécution de tâches d'IA du second module de fonction, une synchronisation de modèles d'IA entre le terminal et la station de base, et
l'acquisition, par une unité d'acquisition et de communication de données du second module de fonction, de données selon l'exigence d'acquisition de données et le mode de prétraitement de données, la génération au moins de données et d'étiquettes acquises, et la communication au moins des données et étiquettes acquises à la station de base.

8. Procédé selon la revendication 7, comprenant en outre :
le fait d'effectuer, par le second module de fonction en interagissant avec un module de fonction de couche de commande de ressources radio, RRC, du terminal, au moins l'un parmi :
la réception d'une première exigence de tâche à partir de la station de base, retransmise par le module de fonction de couche RRC ;
l'envoi, par le module de fonction de couche RRC, d'une deuxième exigence de tâche générée par le second module de fonction lui-même à la station de base ;
la réception d'une ou plusieurs configurations, qui sont envoyées à partir de la station de base et retransmises par le module de fonction de couche RRC, de configurations comprenant le premier modèle et algorithme d'IA, l'exigence d'acquisition de données, le mode de prétraitement de données, la configuration de tâches d'IA, et les indices d'évaluation de modèle d'IA ; ou
l'envoi, par le module de fonction de couche RRC, d'au moins l'un parmi les données acquises, les étiquettes, les résultats d'évaluation de modèles d'IA ou les paramètres de modèles d'IA à la station de base.

9. Procédé selon la revendication 7, comprenant en outre :
le fait d'effectuer, par le second module de fonction en interagissant avec un module de fonction de couche de commande d'accès au support, MAC, du terminal, au moins l'un parmi :
la réception d'une troisième exigence de tâche qui est envoyée à partir de la station de base, retransmise par le module de fonction de couche MAC ;
l'envoi d'une quatrième exigence de tâche générée par le second module de fonction lui-même à la station de base ;
la réception d'une ou plusieurs configurations, qui sont envoyées à partir de la station de base et retransmises par le module de fonction de couche MAC, de configurations comprenant le premier modèle et algorithme d'IA, l'exigence d'acquisition de données, le mode de prétraitement de données, la configuration de tâches d'IA, et les indices d'évaluation de modèle d'IA, et l'envoi de la ou des configurations à l'unité de réception de configurations ; ou
l'envoi, par le module de fonction de couche MAC, d'au moins l'un parmi les données acquises, les étiquettes, les résultats d'évaluation de modèles d'IA ou les paramètres de modèles d'IA à la station de base.

10. Station de base, comprenant un processeur (901), une mémoire (903), et un programme stocké sur la mémoire (903) et exécutable sur le processeur (901), le programme mettant en œuvre des étapes du procédé selon l'une quelconque des revendications 1 à 6 lorsque le programme est exécuté par le processeur (901).

11. Terminal, comprenant un processeur (1001), une mémoire (1003) et un programme stocké sur la mémoire (1003) et exécutable sur le processeur (1001), le programme mettant en œuvre des étapes du procédé selon l'une quelconque des revendications 7 à 9 lorsque le programme est exécuté par le processeur (1001).

12. Support de stockage lisible par ordinateur sur lequel est stocké un programme informatique qui, lorsqu'il est exécuté par un processeur, met en œuvre des étapes du procédé selon l'une quelconque des revendications 1 à 6.

13. Support de stockage lisible par ordinateur sur lequel est stocké un programme informatique qui, lorsqu'il est exécuté par un processeur, met en œuvre des étapes du procédé selon l'une quelconque des revendications 7 à 9.
